# EUROPÄISCHE PATENTANMELDUNG

(11) **EP 1 788 791 A1**
(43) Veröffentlichungstag der Anmeldung: **23.05.2007**
(21) Anmeldenummer: 06006188.4
(22) Anmeldetag: 24.03.2006
(51) Int. Cl.: H04M 3/42

(54) **Verkehrslenkung von Meldungen von einem an ein packetvermitteltes Netzwerk angeschlossenen Teilnehmer an eine Notrufstelle**

(71) Anmelder: SIEMENS AKTIENGESELLSCHAFT, 80333 München (DE)
(72) Erfinder: Hoffmann, Klaus, 81735 München (DE)
(74) Vertreter: Kley, Hansjörg

(57) **Zusammenfassung**

Von A-Teilnehmern (SIP-Subs), die den sprachdienst über IP benutzen, können ohne besondere Massnahmen entstammende Not-rufe nicht korrekt zu einer zuständigen Notrufstelle (E-Subs) «geroutet» werden. Dazu wird ein Verfahren zum Routing von Notrufen bei dem für ein vom A-Teilnehmer (SIP-Subs) initiierter Verbindungs-aufbau mit einer Notrufnummer im Mediagateway-Controller (MGC B) eine Anwendung vorgesehen ist, mit der eine in einer Verbindungsaufbaumeldung enthaltene zugangsnetzwerkTinformmation mittels einer Tabelle in eine die zuständige Notrufstelle (E-Subs) identifizierende Nummer umgewertet wird.

## Beschreibung

Die vorliegende Erfindung betrifft ein Verfahren zum Routing von Notsignalen in einem hybriden Netzwerk gemäss dem Oberbegriff des Patentanspruches 1 bzw. ein System zur Durchführung des vorgenannten Verfahrens gemäss dem Patenanspruch 9.

Im folgenden wird anstelle einer deutschen Nichtfachsprache die englisch-sprachige Nomenklatur aus den Normen der ITU-T und der IETF benutzt, wie z.B. «IP-Gate-way», «Border Gateway» oder «Application Level Gateway»., wie z.B. «IP-Gateway», «Border Gateway» oder «Application Level Gateway». Dadurch lassen sich Unklarheiten vermeiden. Ebenso werden allgemein bekannte kurze englischsprachige Begriffe anstelle einer deutschen Nichtfachsprache verwendet wie z.B. «routing», «bearer» usw. Eine Liste der verwendeten Abkürzungen und Begriffe am Schluss dieses Dokumentes ist integraler Bestandteil dieser Schrift; ebenso wird auf das Vokabular gemäss [1] abgestützt.

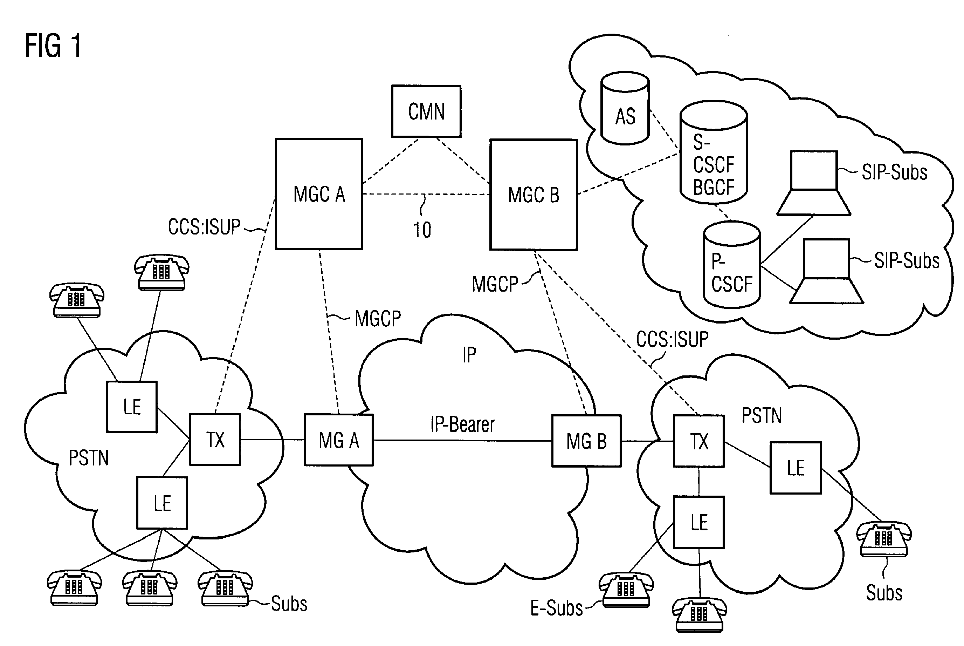

Neuere Kommunikationsarchitekturen sehen die Trennung vermittlungstechnischer Netzwerke in verbindungsdienstbezogene Einheiten und den Transport der Nutzinformationen (bearer Control) vor. Die grundsätzliche Architektur ist in Figur 1 dargestellt. Hieraus resultiert eine Dekomposition/Trennung von Verbindungsaufbau und Medium- bzw. Beareraufbau. Die Übertragung der Nutzinformationen (Durchschaltung des Nutzkanals) kann dabei über unterschiedliche hochbitratige Transporttechnologien wie z.B. ATM, IP oder Frame Relay vorgenommen werden. Die Steuerung der Media Gateways MG A, MG B können von jeweils zugeordneten Media Gateway Controllern MGC A, MGC B durchgeführt werden. Zur Steuerung der Media Gateways MG A, MG B verwenden die Media Gateway Controller MGC A, MGC B normierte Protokolle, wie z. B. das MGCP Protokoll [2]. Zur Kommunikation untereinander verwenden die Media Gateway Controller MGC A, MGC B ein durch die ITU-T standardisiertes BICC (Bearer Independent Call Control) Protokoll, das aus einer Mehrzahl von standardisierten Protokollen gebildet ist und somit eine Protokollfamilie umfasst [3] .

Ein dem BICC Protokoll adäquates Protokoll ist bei dem IETF Standardisierungsgremium mit dem SIP Protokoll (Session Initiation Protocol, RFC3261) bzw. dem Zusatz SIP-T) / SIP-I gemäss RFC3204 entstanden. Mit letzteren können ISUP-Nachrichten - im Gegensatz zum SIP-Protokoll - übertragen werden. Die Übertragung der ISUP-Nachrichten erfolgt im allgemeinen durch Tunnel, d.h. durch ein transparentes Durchreichen.

Der verbindungsaufbau zwischen zwei oder mehreren SIP-Teilnehmern erfolgt unter Zuhilfenahme von SIP-Protokollelementen. Hierbei werden unter anderem SDP - Meldung gemäss RFC 2327 ausgetauscht. SDP--Daten sind (Bearer-) endpunktbezogene Daten, die Informationen über Codecs, IP-Port, IP-Adresse usw, enthalten. Soll eine Verbindung zwischen einem SIP-Teilnehmer und einem H.323 oder TDM / ISDN Teilnehmer eines PSTN-Netzwerkes erstellt werden, müssen diese SIP-Protokollelemente in den beteiligten Media Gateway Controllern entsprechend in H.323=, TDM- oder ISDN Protokollelemente umgesetzt werden. Beispielsweise bedeutet dies für einen aus der SIP Welt gerufenen TDM Teilnehmer Subs, dass die in der TDM Welt verwendeten ISUP-NaChrich.ten wie beispielsweise die ISUP-Nachricht IAM (Initial Address Message) erzeugt und diesem zugeführt werden muss.

Erste grundsätzliche Betrachtungen haben innerhalb der ITU-T zur Draft Recommendation Q.1912.5 «Interworking SIP and BICC/TSUP» [3] geführt. Hierbei wurden auch schon erste Überlegungen bezüglich der aus der ISDN Welt bekannten Supplementary Services gemacht. Gleichzeitig werden Dienste, die im bei dem IETF Standardisierungsgremium entstandenen SIP-Protokoll RFC 3261 (Juni 2002) beschrieben sind, weiter detailliert und/oder erweitert/eingeschränkt.

Durch regulatorische Vorgaben ist es erforderlich, dass unabhängig von verwendeten Iiommunikationsarchitekturen und unabhängig von der Trennung vermittlungstechnischer Netzwerke in verbindungsdienstbezogene Einheiten und den Transport der Nutzinformationen bei so genannten Notrufen der geographische Aufenthaltsort des betreffenden A-Teilnehmers an den B-Teilnehmer, das ist eine Notrufzentrale, übermittelt werden muss. Damit verbunden ist auch, dass ein Notruf abhängig vom geographischen Ort an eine zuständige Notrufzentrale zu leiten/lenken ist. In einem klassischen Fixnetz war dies relativ einfach zu lösen, in dem die betreffende Rufnummer eineindeutig ein bestimmten Gebiet zugeordnet ist und entsprechend eine Leitweglenkung an die Zuständige Notrufstelle vorgenommen wird, dies kann dabei teilnehmerindividuell eingerichtet an der gleichen Vermittlungsstelle eingerichtet werden. Dies ist z.B. erforderlich im Grenzgebiet einer Region und Stadt, wo entsprechend der geographischen bzw. politischen Zugehörigkeit ein Notruf entweder an die NotrufZentrale der Stadtpolizei oder der Kantonspolizei geleitet/gelenkt wird.

Bei GSM-Teilnehmern und bei Teilnehmern die den Sprachdienst über IP benutzen können ohne besondere Massnahmen allfällige Notrufe nicht korrekt «geroutet» werden.

In der Schrift WO 2005/084002 A1. [6] ist ein verfahren zur Bestimmung des Ortes eines Notrufes offenbart, der von einem Teilnehmer eines packet-orientierten Netz entstammt. Mit dieser Ortsinformation kann ein solcher Notruf einer zuständigen Notrufzentrale geleitet werden. Dies wird wie folgt gelöst:
Bei einem Notruf erfolgt von einem «call server» aus eine Anfrage an einen «location information server» LIS. Im Server LIS sind zu den IP-Adressen der Teilnehmer im Access-Bereich die entsprechenden geographischen Angaben wie Ort, Strasse, Hausnummer usw. abgelegt. Aufgrund dieser Anfrage werden diese ortsbezogenen Daten an einen «location gateway server» LGS gerichtet. Im Server LGS ist eine Datenbasis enthalten, in die zu einer geographischen Angabe die zuständige Notrufzentrale und die entsprechende «routing information» gespeichert sind. Diese routing information wird an den call server zurückgesandt, so dass nun ein solcher Notruf zur zuständigen Notrufzentrale vermittelt werden kann.

Die offenbarte Lösung beruht auf amerikanischen Standards und ist in Europa tel quel nicht implementierbar. Darüberhinaus ist ein erheblicher Aufwand für die Datenpflege erforderlich, da Strassennamen und Ortsangabe insbesondere bei sogenannt nomadisierenden Teilnehmern oft nicht eruierbar sind.

Der vorliegenden Erfindung liegt daher die Aufgabe zugrunde, ein Verfahren und ein System zum Routing von Notsignalen in einem hybriden Netzwerk anzugeben, dass möglichst einfach und unter Berücksichtigung der einschlägigen RFC's und der 3GPP-Spezifikationen implementiert werden kann.

Diese Aufgabe wird für ein Verfahren der eingangs genannten Art durch die im Patentanspruch 1 angegebenen Merkmale gelöst.

Durch das erfinduzigsgemässe Verfahren, wonach
«für eine vom A-Teilnehmer initiierte eine Notrufadresse enthaltende verbindungsmaufbaumeldung oder eine Meldung ohne gleichzeitigen verbindungsaufbau eine Anwendung vorgesehen ist, mit der eine in der Verbindungsaufbaumeldung oder in der Meldung ohne gleichzeitigem Verbindungsaufbau enthaltene Zugangsnetzwerkinformation mittels einer Tabelle in eine die zuständige Notrufstelle eineindeutig identifizierende Notrufadresse umgewertet wird»;
ist ein Verfahren geschaffen, welches auf reproduzierbare und einfache Weise die zuständige Notrufstelle in eineindeutiger Weise identifiziert. Auf diese Weise ist somit das Problem gelöst, dass eine Notrufadresse aus einer Mehrzahl von durch die Notrufadresse definierten Notrufstellen die abhängig vom Ursprung zuständige Notrufstelle erreicht wird.

In besonderen Implementationen ergibt sich der Vorteil, dass im Mediagateway-Controller oder in einem Application Server die ohnehin schon gespeicherte Zugangsnetzwerkinformation benutzt werden kann, Dadurch ist auch eine leichtere Aktualisierbarkeit sichergestellt.

Die Erfindung ist nicht darauf beschränkt, dass der A-Teilnehmer stets an einem packetvermittelten Netz und der B-Teilnehmer stets an einem leitungsvermittelten Netz angeschlossen zu sein braucht. Ebenso ist die Erfindung nicht auf Notrufe im Sinne des Sprachdienstes beschränkt, sondern generell implementiertbar für Notsignale. Notsignale im Sinne dieser Schrift sind Meldungen an eine durch eine besondere Adresse bestimmte Notrufstelle. Denkbar ist, die Erfindung auch für den Dienst SMS oder Instant Messaging IM vorzusehen und dann abhängig vom Typ der zuständigen Notrufstelle vorgängig noch eine Text-to-Speechkonversion vorzusehen, die letzteren zwei Dienste SMS bzw. IM werden im Gegensatz zur klassischen Leitungsvermittlung als verbindungslos bezeichnet.

Weitere vorteilhafte Ausgestaltungen der Erfindung sind in den abhängigen Ansprüchen angegeben.

Die Erfindung wird nachfolgend anhand der Zeichnung beispielsweise näher erläutert. Dabei zeigen:
- Figur 1: Architektur eines Kommunikationsnetzwerkes mit SIP- und PSTN-Teilnehmern;
- Figur 2: Struktur einer globalen Zellenidentifikation

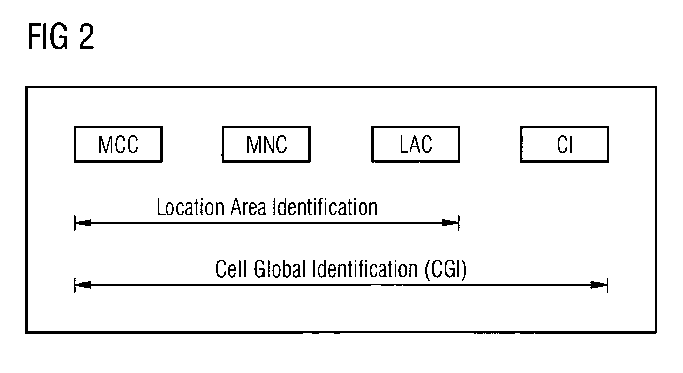

Eine bevorzugte Ausführungsform der vorliegenden Erfindung wird anhand der Figuren 1 und 2 erläutert und zwar für den Fall, wo der A-Teilnehmer SIP-Scriber Teilnehmer an einem packetvermittelten Netz ist und der B-Teilnehmer an einem leitungsvermittelten Netz PSTN angeschlossen ist. Die bevorzugte Ausführungsform bezieht sich auf den Sprachdienst, ist aber wie vorgängig erläutert nicht darauf beschränkt.

Figur 1 zeigt die Architektur eines hybriden Kommunikationsnetzwerkes. Links und rechts sind rein beispielhaft die klassischen über IP als ausgebildete Transportnetzwerk (auch Core genannt) gekoppelten PSTN-Netzwerke dargestellt. An diesen PSTN-Netzwerken sind analoge und digitale (ISDN) Teilnehmer Subs angeschlossen. Es wird angenommen, dass im Netzwerk PSTN rechts in der Figur 1 eine Notrufstelle E-Subs angeschlossen ist. Die beiden Netzwerke PSTN sind jedoch nicht streng als örtlich begrenzte Netzwerke zu verstehen. Ebenso gut könnten weitere Teilnehmer als zuständige Notrufstelle E-Subs angeschlossen sein. Aus Übersichtlichkeitsgründen wird verzichtet, in der Figur 1 eine genaue Unterscheidung zwischen einem gewöhnlichen Teilnehmer und einer Notrufstelle vorzunehmen, In der Figur 1 nicht dargestellt sind über z.B. GSM oder UMTS verbundene mobile Teilnehmer. Dies ist für die vorliegende Erfindung nur insoweit relevant, als diese mobilen Teilnehmer ebenfalls über den Adressierungsteile Mobile Country Code MCC, des Mobile Network Code MNC und der Local Area Identification LAC und der Cell Identity CI gemäss T S23.003 [7].

Die Notrufnummern sind beispielsweise:
- 117: Polizei wobei abhängig vom A-Teilnehmer ein Anruf auf die betreffende Stadtpolizei (z.B. Winterthur oder Zürich) oder auf die Karitozxspolizei geroutet wird.
- 118: Feuerwehr, wobei die Alarmmeldestelle oft überregional tätig ist
- 144: Sanitätsnotruf, Rettungsdienst, wobei die Alarmmeldestelle meist überregional tätig ist;
- 1414: Luftrettung, dabei ist die Alarmstelle national einzigartig, dies bedeutet, dass die vorliegende Erfindung für das ursprungsabhängige Routing irrelevant ist.

Erfindungsgemäß wird die Einführung einer Applicatiowcrorgeschlagen, die in der CSCF (S-CSCF) oder auf einem Application Server AS oder auf einer neuen eigenständigen Einheit in dem IMS Netz die empfangene P-Access-Network-Info mit der Cell Global Identity in der folgenden Art und Weise auswertet und den SIP Request (z.B. SIP INVITE aber nicht darauf beschränkt, z. B könnte auch eine INSTANT Message grundsätzlich genauso behandelt werden) weitersendet. Üblicherweise enthält die R-URI des SIP request z.b. die 110 oder 911 in USA um zum Emergency center zukommen,

Gemäss RFC3455 [5] "3GPP SIP P-Header Extension" gibt es den 3GPP Header "p-access network-info", siehe dazu «4.4 The P-Access-Network-Info header» und den nachstehend Auszug aus Kapitel 5.4:

### «5.4 P-Access-Network-Info header syntax

The syntax of the P-Access--Network-znfo header is described as follows:

| | |
|---|---|
| P-Access-Network-Info = | "P-Access-Network-Info" HCOLON access-net-spec |
| access-net-spec = | access-type *(SEMI access-info) |
| access-type = | "IEEE-802.11a" / "IEEE-802.11b" / "3GPP-GERAN" / "3GPP-UTRAN-FDD" / "3GPP-UTRAN-TDD" / "3GPP-CDMA2000" / token |
| access-info = | cgi-3gpp / utran-cell-id-Ogpp / extension-access-info |
| extension-access-info = | gen-value |
| cgi-3gpp = | "cgi-3gpp" EQUAL (token / quoted-string) |
| utran-cell-id-3gpp | = "utran-cell-id-3gpp" EQUAL (token / quoted-string) |

Die Stuktur P-Access-Network-Info kann zusätzliche Informationen bezüglich des Zugangsnetzwerkes enthalten: Die Werte für "cgi-3gpp" and "utran-cell-id-3gpp" sind in 3GPP TS 24.229. definiert.

Die Figur 2 zeigt die Verknüpfung (concatenation) des Mobile Country Code MCC, des Mobile Network Code MNC und der Local Area Identification LAC und der Cell Identity CI zur Cell Global Identification.

Um das wichtige Feature Emergency call wie bisher vom Anwender im normalen Telefonnetz erwartet nun auch in hybrid Netzen anbieten zu können, wird folgendes Verfahren vorgeschlagen:

Gemäß Auszug aus TS24.229 Kapitel 8.3.1.1 [8] wird der P-Access-Network-Info mit "3GPP-GERAN", und der cgi-3gpp parameter mit der Cell Global Identity versorgt. Dabei ist die Cell Global Identity CGI die Zusammensetzung (concatenation) von Mobile Country Code MCC, Mobile Network Code MNC, Local Area Code LAC und Cell Identity CI gemäss Figur 2. Dies ist auch aus 3GPP TS 23.003 [7] zu entnehmen. Die Cell Identity CI muss dabei eindeutig innerhalb einer location area sein.

Diese Applikation im Application Server AS enthält folgende Tabelle 1:

**Tabelle 1**

| Notruf-Nr in SIP-Meldung | MCC des P-Access-Network-Info header | MNC des P-Access-Network-Info header | LAC des P-Access-Network-Info header | CI des P-Access-Network-Info header | Abbild der geographisch en Lage der Zelle in der Applikation | Emergency number in request URI des zu sendenden Requests |
|---|---|---|---|---|---|---|
| 117 | 123 | 456 | ABCD | EFAB | 8953 | 1178953 |
| 117 | 123 | 456 | ABCD | EFAC | 8955 | 1178955 |
| 117 | 123 | 456 | ABCD | EFAE | 8955 | 1178955 |
| .. | | | | | | |
| 118 | 457 | 128 | BCDE | FFAB | 7465 | 1187465 |
| 118 | 457 | 128 | BCDE | FFAC | 7480 | 1187480 |

Die die Einträge in der Tabelle sind statisch, jedoch durch eine Network-Management-Operation veränderbar.

Wenn der SIP Teilnehmer SIP-Subs die Rufnummer 117 wählt und im P-Access-Network-Info header dann «123 456 ABCD EFAB» drin steht, dann nimmt die Applikation die Routing-Info «8953» aus der Tabellezeile und hängt dies an die Rufnummer 117 an. Der Teil «8953» wird für das Routing im PSTN-Netz verwendet. Der vorstehend erwähnt Begriff Routing-Info ist in der Tabelle mit «Abbild der geographischen Lage der Zelle in der Applikation» bezeichnet. Das sich mobile Teilnehmer des packetvermittelten Netzes in verschiedenen durch die Cell Identity CI definierten Zellen, befinden können, sind ggf. für verschiedene CI verschiedene Abbilder für das Routing im Netz PSTN vorzusehen.

In der MGCF als Teil des Mediagateway-Controllers MGC B wird vereinbarungsgemäß die zugesetzten Ziffern zum Routen zum tatsächlichen Emergency Center benutzt. Nach der Transfor- , mation wird der Request URI entsprechend der obigen Transformationstabelle wird zum Netz PSTN gesendet (gegebenenfalls über BGCF/MGCF), meistens zu einer Transitvermittlungsstelle TX. Somit wird also die zuständige Notrufstelle E-Subs erreicht.

Es ist noch eine weitere Ausführungsform zweckmässig, die in der Figur 1 nicht dargestellt ist. Notrufstellen E-Subs sollten stets erreichbar sein, diese werden daher meist an zwei verschiedene und zwar örtlich verschiedene Ortsvermittlungsstellen LE angeschlossen, damit in einem Katastrophen-fall, z.B. Brand in einer Ortsvermittlungsstelle LE , die Notrufstellen E-Subs immer noch erreichbar sind. Das Routing wird dabei durch Mechanismen innerhalb des Telekommunikationsnetzes PSTN statisch oder dynamisch vorgenommen.

Der A-Teilnehmer braucht nicht notwendigerweise ein SIP-Teilnehmer zu sein, denkbar ist auch, dass dessen Signalisierung über H.323 oder H.248 der einschlägigen Standards von ITU-T erfolgt und dieser kurz als H.323- bzw. H.248-Teilnehmer bezeichnet wird.

Die vorstehend aufgeführten weiteren Ausbildungen bezüglich des A-Teilnehmers bzw. des B-Teilnehmers E-Subs sind frei kombinierbar, ebenso auch die Dienste Sprachdienst und/oder SMS oder Instant Messaging IM.

### Liste der verwendeten Bezugszeichen, Akronyme; Glossar

- 3GGP: 3rd Generation Partnership Project; 3GPP htto://www.3opo.org
- AS: Application Server
- BICC: Bearer Independent Call Control
- BGCF: Breakout Gateway Control Function
- CCS:ISUP:ISDN: User Part
- CGI: Cell Global Idnetification
- CI: Cell Identity
- CSCF: Call Server Control Function
- E-Subs: Emergency Subscriber, Notrufstelle
- IM: Instant Messaging
- IMS: IP Multimedia Subsystem
- IP: internet Protokoll
- ISDN: Integrated service digital network
- ISUP: ISDN User Part
- ITU-T: Telecommuncation Standardization sector of ITU
- LE: Line Exchange; Ortsvermittlungsstelle
- LAC: Location Area Code; gemäss [7]
- MCC: Mobile Country Code; gemäss [7]
- MG: Media Gateway
- MGC: Media Gateway Control
- MGCP: Media Gateway Control Part
- MNC: Mobile network Code; gemäss [7]
- P-CSCF: Proxy CSCF
- PSTN: Public switched telecommunication network
- RFC: request for comment
- S-CSCF: Serving CSCF
- SIP: Session Initiation Protocol
- SIP-T: SIP Tunnelling von ISUP-messages
- SMS: Short Message Service
- Subs: Subscriber; Teilnehmer
- TX: Transit Exchange; Transitvermittlungsstelle
- URI: Uniform Resource Identifier
- 10: MGC-MGC-Signalling (Bearer Aufbau) über ISUP+ oder SIP-T oder BICC CS2

### Literaturliste

[1] 3GPP TR 21.905
   3rd Generation Partnership Project; Technical specification group services and system aspects; vocabulary for 3GPP specifications (release 7)
[2] IETF RFC2705
   Media Gateway Control Protocol (MGCP) Version 1.0. M. Arango, A. Dugan, I. Elliott, C. Huitema, S. Pickett. October 1999, Obsoleted by RFC3435, Updated by RFC3660.
(Status: INFORMATIONAL)
[3] ITU-T Q.197.2.5
   Interworking between Session Initiation Protocol (SIP) and Bearer Independent Call Control protocol or ISDN User Part
[4] RFC 2327
   «SDP: Session Description Protocol»
   M. Handley, V. Jacobson
   April 1992.
[5] RFC 3455
   «Private Header (P-Header) Extensions to the Session Initiation Protocol (SIP) for the 3rd-Generation Partnership Project (3GPP) »
   M. Garcia-Martin, E. Henrikson, D. Mills.
   January 2003.
[6] WO 2005/084002 A1
   «Determining the geographical location from which an emergency call originates in a packet-based communications network»
   Nortel Networks Limited, Québec H4S 2A9, Canada.
[7] 3GPP TS 23.003
   3rd Generation Partnership Project; Technical Specification Group Core Network and Terminals; Numbering, addressing and identification (Release 6)
[8] 3GPP TS 24.229
   Digital cellular telecommunications system (Phase 2+); Universal Mobile Telecommunications System (UMTS); Internet Protocol (IP) multimedia call control protocol based on Session Initiation Protocol (SIP) and Session Description Protocol (SDP); Stage 3

## Patentansprüche

1. Verfahren zum Routing von Notsignalen an eine Notrufadresse von einem an einem packetvermittelten Netzwerk (IP) angeschlossenen A-Teilnehmer (SIP-Subs) zu einer zuständigen Notrufstelle (E-Subs), wobei die zuständige Notrufstelle (E-Subs) ein B-Teilnehmer eines weiteren Telekommunikationsnetzes (PSTN, IP) ist,
**dadurch gekennzeichnet, dass**
für eine vom A-Teilnehmer (SIP-Subs) initiierte eine Notrufadresse enthaltende Verbindungsaufbaumeldung oder eine Meldung ohne gleichzeitigen Verbindungsaufbau (SMS, IM) eine Anwendung vorgesehen ist, mit der eine in der Verbindungsaufbaumeldung oder in der Meldung ohne gleichzeitigem Verbindungsaufbau (SMS, IM)enthaltene zugangsnetzwexkiniormation mittels einer Tabelle in eine die zuständige Notrufstelle eineindeutig identifizierende Notrufadresse umgewertet wird.

2. Verfahren nach Anspruch 1,
**dadurch gekennzeichnet, dass**
die Notrufstellen B-Teilnehmer eines leitungsvermittelteten Netzes (PSTN) oder packetvermittelnden Netzes (IP) sind und die Notrufstellen durch eine Notrufnummer identifiziert werden.

3. Verfahren nach Anspruch 2,
**dadurch gekennzeichnet, dass**
die Anwendung und die Tabelle entweder in einem Application Server (AS) oder im Mediagateway-Controller (MGC B) oder in einer Call Server Control Function (CSCF) vorgesehen sind.

4. Verfahren nach Anspruch 2 oder 3,
**dadurch gekennzeichnet, dass**
die Umwertung **dadurch** erfolgt, dass der Notrufnummer Ziffern zum Routen hinzugefügt werden.

5. Verfahren nach Anspruch 4,
**dadurch gekennzeichnet, dass**
die Ziffern der Notrufnummer vorangestellt oder nachgestellt werden.

6. Verfahren nach einem der Ansprüche 1 bis 5,
**dadurch gekennzeichnet, dass**
der A-Teilnehmer ein SIP- oder ein H.323- oder ein H-248-Teilnehmer ist.

7. verfahren nach einem der Ansprüche 2 bis 6,
**dadurch gekennzeichnet, dass**
die die zuständige Notrufstelle identifizierende Nummer einer einer Transitvermittlungsstelle (TX) des leitungsvermittelten Netzes (PSTN) zugeführt wird.

8. Verfahren nach einem der Ansprüche 2 bis 7,
**dadurch gekennzeichnet, dass**
die die zuständige Notrufstelle an mindestens einer Ortsvermittlungsstelle (LE) angeschlossen ist.

9. System mit Mitteln zur Durchführung der Schritte des Verfahrens nach einem der Ansprüche 1 bis 8.
